**Europäisches Patentamt**

**European Patent Office**

**Office européen des brevets**

(11) Publication number : **0 483 078 A1**

# (12) EUROPEAN PATENT APPLICATION

(21) Application number : **91830420.5**

(22) Date of filing : **09.10.91**

(51) Int. Cl.⁵ : **A01G 27/00**

(30) Priority : **10.10.90 IT 369090**

(43) Date of publication of application :
**29.04.92 Bulletin 92/18**

(84) Designated Contracting States :
**DE ES FR GB NL**

(71) Applicant : **Sommariva, Piero**
**Via degli Ortolani, 7**
**I-40139 Bologna (IT)**

(72) Inventor : **Sommariva, Piero**
**Via degli Ortolani, 7**
**I-40139 Bologna (IT)**

(74) Representative : **Dall'Olio, Giancarlo**
**INVENTION s.n.c. Via Arienti 26**
**I-40124 Bologna (IT)**

(54) **Device for the automatic watering of plants.**

(57) The device makes it possible to water plants of various kinds, in a completely automatic way be means of a folded Hose (7) connected with an oscillating rod (8) and a step of absorbing material (10), according to a predetermined and adjustable quantity, after time intervals which depend on the temperature, on the humidity and air ventilation in the environment where the device is located.

The proposed device can be made with low cost, performs its function in a satisfactory and reliable way, and requires almost no maintenance.

fig. 1

As it is known the optimal irrigation of plants and other coltures must provide soil with the right degree of humidity, depending on special requirements of the various plants.

In order to keep the above mentioned degree of humidity as constant as possible, it is necessary to vary the frequency of irrigation, according to the surrounding environment: in fact, when temperature, humidity and air ventilation vary, the velocity of evaporation of water contained in soil varies as well.

This problem is particularly felt in the case of home plants, cultivated in pots or little gardens, in which case it may be difficult to ensure the necessary control, especially if the owners are away from home.

The device being the subject of this invention, is aimed at allowing plants cultivated in pots or in the soil to be irrigated with amounts of water which can be predetermined and adjusted, according to variable intervals of time depending on the environment climatic conditions, with a totally automatic adjustment to any variation of the latter.

There are many patent publications about this subject, such as the ones discussed in the following.

In the DE-A-2 327 587 there is disclosed a device for the automatic watering of plants, that includes a valve located inside the water duct which departs from a water source.

The valve is actuated in accordance with the position of a rocker that bears, with one end, a container.

When the container is filled up, it goes down thus allowing the water to go out through a pipe, that is attached to the container with an inclination such that the water goes out only when the container is down. At the same time the valve is closed.

When the container is empty, then the part of the rocker opposite to the container, made heavy with water, makes the rocker to oscillate, thus starting again the filling up of the container.

A magnetic plate, fixed to the lower surface of the rocker, keeps the container in the upper position until the weight of the water collected inside it is enough to detach the heavy part of the rocker from the base of the device.

In the FR-A- 797 176 there is described an apparatus for watering of large areas. In this apparatus there is a counterweight fixed to an end of a rocker, to the other end of which there is fastened a container.

The pivot of the rocker is connected with a valve inside the water duct. When the counterweight is in a lower position the water duct is open, so that the water is sent to the ejectors.

At the same time the water also is sent to the container, that, when is filled up, is heavier than the counterweight. So the container pushes down the rocker thus closing the valve. When the container is down, the water inside it goes out because the container has rotated. Therefore the container becomes light again and goes up.

From the EP-A-0 245 149 there is known a device in which a valve control closes the valve when the water level in a distribution tank attains a predetermined level and opens it after a predetermined time to distribute tank water to a lower distribution reservoir. The valve control has a ramp pivot mounted about a horizontal axis near an intermediate reservoir base.

A valve control rod extends between the valve moving part and the corresponding ramp end and a recall device pivots the ramp upwards to open the valve.

When the tank water level attains a predetermined value a,distributor allows water flow from the tank onto the ramp and a sponge. The device does not require an external supply of energy.

The US-A-4 157 770 discloses an apparatus a water gravity plant feeder is for use wiht bottled water or hose connection to a water supply. The plant feeder comprises a housing, a water bottle mounted on the housing, and a device for supplying water from the bottle to plants arranged adjacent the housing.

The watering device comprises an inner feed tray positioned under the water bottle for supplying a measured level of water at intevals to a water trough. When full, water is spilled from the trough into a sump in the housing, hence it flows into a water distributor for watering a number of plants. The plant feeder is also provided with mechanism for using water from a water tap.

Also the FR-A-2 358 101 describes a plant watering device designed to ensure an even flow of water to a vessel containing a number of plants, is intended to be self operating. Under the vessel there is a pair of arms attached to a hinge one end, supporting the vessel itself.

These squeeze between them a resilient tube which then travels upwards and over the top, to discharge inside the container.

When the earth inside the container is dry, the weight is insufficient to close the tube, and water passes through. This increases the weight until the tube is flattened. To control the closing pressure, a spring and adjusting screw are fitted between the outer ends of the arms.

The device being the subject of this invention is very simple and can be obtained at a very low cost, in respect of the devices disclosed in the above mentioned publications.

The features of the invention referred to above, are pointed out in the appended claims, while the following description particularly discloses the preferred embodiments.

Special reference is made to the drawings attached herewith, where:

– Figures 1 and 2 show a schematic view of a first embodiment of the device, in two characteristic phases of each operating cycle;

– Figures 3 and 4 show a further embodiment of the device; and

– Figures 5 and 6 show another embodiment of the device.

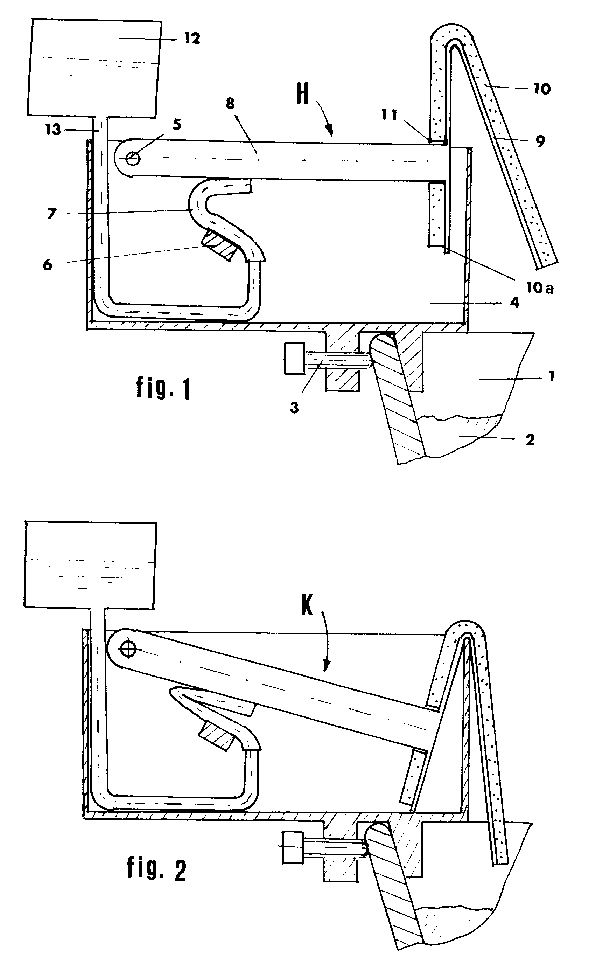

With reference to said figures 1 and 2, the numeral 1 indicates the upper edge of a pot for plants or flowers, shown in cross-section.

The soil contained in the pot is indicated by 2; the humidity of the soil 2 is to be maintained at the right degree as requested by the plant.

A container 4 is fixed at the edge 1 of the pot in stabile position, e.g. by means of e.g. a screw locking, and bears the housing for a pivot 5 and a fixed appendix 6 that serves as support for a hose 7.

The hose 7 is made of elastic material, e.g. of gum, and is folded beforehand, but with such a fold that it does not disturb the flow of the liquid.

On the pivot 5, there is a rod 8, able to oscillate vertically with its free end, opposite to the pivot 5.

A support 9, shaped like an overturned V, is fastened to the free end of the rod 8 and bears a strip 10 of an absorbent material applied and glued on it.

The width of the strip 10 must be such that its continuity is not cut as a consequence of the presence of a slit 11 made on the same strip 10 for the passage of the rod 8, that has a certain thickness.

Numeral 12 indicates a tank, containing water or another suitable liquid, from which the pipe 13 starts. The pipe 13 is in turn connected with the hose 7.

The hose 7 is secured with the fixed support 6 at one end, and with the rotating rod 8 at the other end.

Each operating cycle of the device consists of two phases, in the first of which (figure 1) the rod 8, together with the elements 9 and 10 fastened to it, is in the position H for filling the container with liquid, and in the second one the same rod 8 is in the position K for emptying the container 4.

When the strip 10 is dried or almost dried, the oscillating rod 8 is kept in the filling position H, because the action of its weight, together with the weight of the support 9 and the strip 10, does not oppose the elastic action of the hose 7,

Therefore, in such conditions, as it is shown in the figure 1, the flow of liquid from the tank 12 to the container 4 is allowed. The level of the liquid begins to rise gradually until it reaches the lower end 10a of the absorbent strip 10; in that moment the strip begins to become imbued and therefore heavy.

At this point the rod 8 goes down, pushing on the hose 7, until it reaches the position K of the figure 2, in which the flow of the liquid from the tank 12 to the container 4 is precluded because the fold of the hose 7 is too sharp.

At the same the water begins to go out from the container 4 through the absorbent strip 10, because of capillarity. A similar exemple of working can be found with wick-oilers.

The liquid is in this way transferred from the container 4 to the soil 2 in the pot 1.

After having completed this transfer, the absorbent strip 10 still remains abundantly imbued of the liquid and therefore considerably heavy.

To make the rotating group 8, 9, and 10 to repass from the position K of the fig. 2 to the position H of the fig. 1 because of the elasticity of the hose 7, there must be a lightening of the absorbent material 10, due to the drying up by evaporation.

Thus the time of the intervention of the device is determined by the environment climatic conditions.

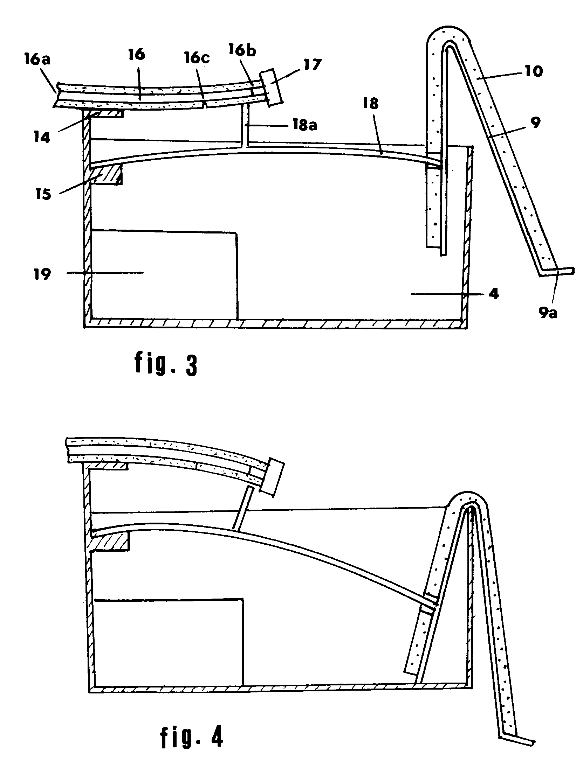

The figures 3 and 4, in which for the sake of simplicity the container 12 and the pot 1 have been omitted, show another one of the possible embodiments of the device.

The container 4 is equipped with two firm stands 14 and 15. The stand 14 serves as support and anchorage for the flexible hose 16, which at one end 16a is connected with the container 12 and at the other is closed by the plug 17.

The stand 15 acts as support and anchorage for a spring plate 18, of metal band or wire, in one end, while the other holds the support 9 and the absorbing strip 10, as already described for the previous embodiment.

The spring plate 18 is provided with an appendix 18a, which in the position showed by the fig. 3 lifts the terminal part 16b of the hose 16 up, curving it upward and leaving it free when the spring plate 18 bends more under the weight of the material 10 while it is becoming imbued.

In the lower part of the hose 16 a small transverse cut 16c is done in order to make a mouth through which the liquid goes out.

In the position of the fig. 3 lips of the mouth are spread apart as a result of the push given by the appendix 18a.

In the position shown in fig. 4 the lips are adherent to each other because of the counterweight, which can be constituted by the same plug 17.

With the lips spread apart the outflow of the liquid from the hose 16 is allowed, while it is barred with the lips adherent.

The plate 9a, with which ends the support 9, can be equipped with all the possible variations of the device.

If the terminal part of the absorbent strip 10 is leaned against this plate, the effect of the emptying is quicker and better due to capillarity of the element 10.

The element 19, usable in all the possible solutions of the device and formed of a non-floating body, if inserted in the container 4, reduces the capacity of the container itself, in such a way that the material 10, in the phase of filling of the container 4, can be reached with a smaller quantity of liquid.

Choosing beforehand the volume of the element 19, it is possible, at every cycle, to deliver an amount of liquid to the individual cultures according to their requirements.

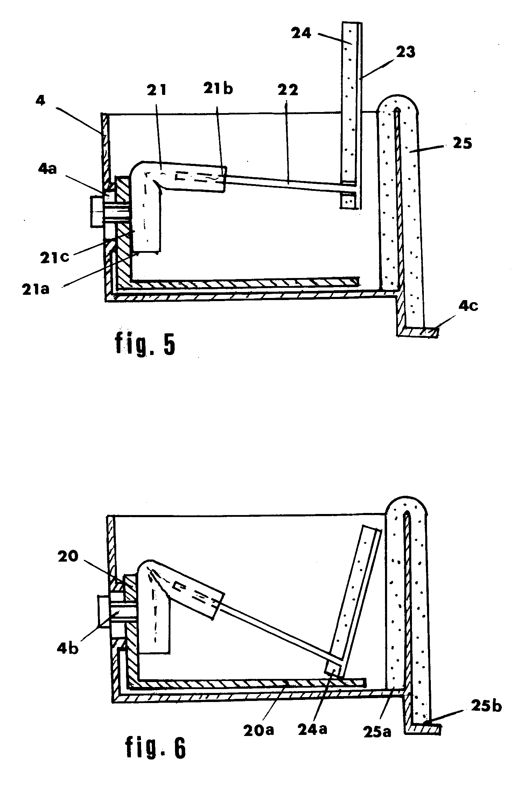

The figures 5 and 6, in which, for the sake of simplicity, the container 12 and the pot 1 have been omitted again, show a further variation of the device with services raised and obstacles reduced.

The container 4 is equipped with a sloted hole 4a for the passage of a screw 4b which holds a support 20 on said container 4. On this support a hose 21 is fixed in its section 21c, by e.g. gluing.

The pipe 21 is made of elastic material with particular features of inalterability and resistence to water and warmth, such as silicon gum so that it does not change its working characteristics with varying atmosferic conditions.

The hose 21 is connected at its terminal part 21a with the container 12 while in its extremity 21b a rod 22 is inserted by forcing, but leaving however a light drainage for the liquid.

A support 23 is fixed at the end of the rod 22 and bears bearing a strip of absorbent material 24, fixed to it. Another absorbent strip 25, is applied to the container 4 so as to be partly out of the same container and adherent both to an ineer and to an outer wall of the container.

The strip 25 has the only function of transfering, by capillarity, the water from the container 4 to the pot 1.

The operating cycle is analogous to the one of the previous solutions although there are variations both constructive and functional.

One of the constructive variations is represented by the hose 21, which now has three functions: of hinge for the support and rotation of the group 22, 23 and 24; of elastic means for making this group to oscillate; of means for intercepting the liquid according to different degree of folding of the same hose. Another constructive variation is represented by the presence of the two strips 24 and 25, the first having the function of provoking the different degree of folding of the pipe 21, and the second having the only function of emptying, by capillarity, the container 4.

If the strip 24 is imbued in the liquid, the hose 21 is folded and does not allow the passage of the liquid. In such conditions, if the end 25a of the strip 25 is adherent to the bottom of the container 4 and the end 25b is adherent to the bottom, the strip manages to carry out the complete emptying of the same container.

At the end of the irrigation cycle, that is when the container 4 is completely empty, the hose 21 however, remains always in the position of the fig.6, because of the considerable weight of the strip 24 still imbued.

The passage from the position of the fig. 6 to that shown in fig. 5 is very gradual, since the strip 24 dries up gradually, by evaporation. Actually, due to the elasticity of the hose 21, first the inferior part 24a of the strip 24 detaches from the appendix 20a of the support 20, and then the strip 24 raises slowly and continuously, due to its gradual lightening.

When a certain level in the height of the strip 24 is reached, the first drops start to come out from the hose 21, at first sporadically and then with increasing frequency.

These first drops however, do not concern the strip 24, in that it does not touch the bottom of the container 4, because of the presence of the appendix 20a, and because it has already started to raise up; they are conveyed out by the strip 25. Therefore the liquid does not accumulate inside the container 4. Such an accumulation starts only when the capacity flow of dripping from the pipe 21 is higher than the flow of emptying, by capillarity, by the strip 25.

Therefore the level of the liquid in the container 4 that reaches the strip 24, is obtained with a differential flow-rate. This allows to deliver considerable amounts of liquid to the plants also with the device of very reduced size.

The device allows also to regulate these amounts. In fact, if the support 20 is fixed to the container 4 at different heights, obtained by the slotted hole 4a, the level of accumulation of liquid necessary to achieve the end 24a of the strip 24 can vary, with consequent variation of the quantity of liquid delivered at every cycle to different cultures, according to the requirements.

In a constructive variation, not illustrated, the emptying of the container 4 can take place with the opening of the draining mouth inclined to the bottom of said container 4 and controlled by the lowering of the rotating group 8, 9 and 10 or by the group 22 and 24.

## Claims

1) Device for the automatic watering of plants, **characterized in that** it comprises:

a container (4), designed to be placed in correspondence with the area to be watered;

a rod (8) hinged with one end to said container, said rod being able to oscillate vertically between two positions, a raised position (H) and a lowered position (K);

a support (9), shaped like an overturned "V", said support being fastened to the free end of said rod (8) in such a way that it is partially inside and partially outside of said container (4);

a strip of absorbing material (10) fixed onto at least one of the surfaces of said support (9) located inside said container, said strip extending over, and being attached to, one of the surfaces of said support (9) located outside said container (4);

a hose (7) located beneath said rod (8) and folded in such a way that it pushes said rod up and holds it, said hose being connected with a tank (12) to deliver liquid into said container when said strip (10) is dry and therefore light, so that said rod remains in said raised position (H), until the level of water in said container reaches the lower end of said absorbing strip (10);
said hose being folded so much as to interrupt the flow of liquid when said liquid into said container is absorbed by said strip (10), the outer part of which is also imbued by capillarity thus causing the liquid to be delivered from the container to the said area to be watered and causing the downward oscillation of said rod (8) until the lowered position (K), kept by said rod until said container (4) is empty and said strip (10) is dry again.

2) Device, as in claim 1, characterized in that said rod (8) is hinged to said container (4) by means of a pivot (5), supported by a suitable housing produced in said container (4).

3) Device, as in claim 1, characterized in that said hose (7) is held by an appendix fixed with at least one wall or with the bottom of the container (4).

4) Device for the automatic watering of plants characterized in that it comprises:
a container (4), designed to be placed in correspondence with the area to be watered;
a spring plate (18) fixed with one end to said container (4) in such a way that it can oscillate vertically and elastically between two extreme positions, raised and lowered;
a support (9) in a form of an overturned "V" fixed to the free end of said spring plate (18) in such a way that it is partially inside and partially outside of said container (4);
a strip (10) of absorbing material fixed to at least one of the surfaces of said support (9) located inside container (4), said strip extending over, and being attached to, one of the surfaces of said support (9) located outside said container (4);
a hose (16) connected at one of its ends (16a) with a tank of liquid and with the other end closed by a plug (17), said hose being positioned over the top of said spring plate (18) so as to be pushed during the upward oscillation of said spring plate (18), said hose (16) furthermore featuring a transverse cut (16c) in its lower part, in such a way that when said strip (10) is dry and therefore light, said spring plate (18) remains in said raised position and said cut is open so that the water is poured in the container until the level of water in said container reaches the lower end of said absorbing strip (10);
said cut of said hose being closed again and the flow of liquid interrupted when said liquid into said container is absorbed by said strip (10), the outer part of which is also imbued by capillarity thus causing the liquid to be delivered from the container to the said area to be watered and causing the downward oscillation of said spring plate (18) until the lowered position, kept by said spring plate until said container (4) is empty and said strip (10) is dry again.

5) Device for the automatic watering of plants characterized in that it comprises:
a container (4), designed to be placed in correspondence with the area to be watered;
a flexible and elastic hose (21), connected at one end with a tank containing water, said hose being fixed to said container (4) and with the free end folded in such a way that its bigger or smaller folding consequently intercepts the flow of the liquid inside said hose;
a rigid rod (22) fastened to the free extremity (21b) of said hose (21) so as to result hinged by the same hose and able to oscillate vertically between two extreme positions, raised and lowered, said rod bearing with its free end a support (23);
a first strip of absorbent material (24) fixed to at least one of the surfaces of said support (23);
a second strip of absorbent material (25) fixed to at least one inner surface of a wall of the container (4) and extending so that it is also fixed to the outer surface of the same wall of the container (4);
said flexible hose being less folded when said strip (10) is dry and therefore light so that said rod (22) remains in said raised position and the water is poured in the container until the level of water in said container reaches the lower end of said first absorbing strip (24), with said second strip (25) being imbued in both its inner and outer parts, by capillarity, thus causing the liquid to be delivered from the container to the said area to be watered;
said hose (21) being more folded, and the flow of liquid interrupted, when said liquid into said container is absorbed by said first strip (24), thus causing the downward oscillation of said rod (22) until the lowered position, kept by said rod (22) until said container (4) is empty, because of the delivering action on said second strip (25) and said first strip (24) is dry again.

6) Device for the automatic watering of cultures as in claim 5 characterized in that it comprises a support (20) attached to the container (4) at an adjustable height in respect of the bottom of the container, in order to vary the level of the liquid in the container necessary for wetting the inferior extremity of the firt absorbing strip (24).

7) Device for the automatic watering of cultures as in claims 5 and 6 characterized in that by varying the thickness or the width of said second absorbing strip (25), or the kind of the material it is made of, it is possible to vary the emptying flow rate that defines, in accordance with the flow rate of the hose (21), both the beginning of the filling up of the container (4), and the value of the differential flow rate for filling of the container (4) up to the requested level.

8) Device as in claims 1 and 4 characterized in that it provides a plate (9a), placed and fixed below the lower extremity of said support (9) out of said container (4), to facilitate the dripping of the liquid from said band (10) and therefore the emptying of the container.

**9)** Device as in claims 5; 6 and 7 characterized in that it provides an appendix (4c) of the container (4) out of the container, on which the extreme and outer edge of the absorbent strip (25) rests for facilitating the dripping of the liquid from said strip and therefore the emptying of the container.

**10)** Device as in claims 1 or 4 characterized in that it provides a non-floating body (19) to insert in the container (4) in such a position that it does not disturb the moving means, so that it reduces the capacity of the container (4), said body (19) having the demanded volume so that the quantity of the liquid necessary because its level reach the lower inner end of the absorbent strip (10), is predetermined.

**11)** Device as in claim 5 characterized in that it provides a non-floating body (19) to insert in the container (4) in such a position that it does not disturb the moving means, so that it reduces the capacity of the container (4), said body (19) having the demanded volume so that the quantity of the liquid necessary because its level reach the lower inner end of the absorbent strip (24), is predetermined.

fig. 1

fig. 2

fig. 3

fig. 4

fig. 5

fig. 6

European Patent
Office

# EUROPEAN SEARCH REPORT

Application Number

EP    91 83 0420

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,A | EP-A-0 394 199 (SOMMARIVA) <br> * claims 1,2; figures * <br> --- | 1,2,5 | A01G27/00 |
| D,A | DE-A-2 327 587 (DEUTSCHE SEMPERIT) <br> * claims; figure * <br> --- | 1,4,5,8 9 | |
| D,A | FR-A-2 358 101 (LAHR) <br> * claim; figure * <br> --- | 1,4,5 | |
| A | US-A-4 115 951 (BECKER ET AL.) <br> * abstract; figures 1,4 * <br> --- | 1,4,5 | |
| A | FR-A-2 386 984 (LE PAIGE DE DOMMARTIN) <br> * page 2, line 28 - page 3, line 4; figure 2 * <br> --- | 1,5 | |
| A | WO-A-8 103 411 (WENINGER) <br> * page 11, line 27 - page 12, line 23; figures 1-4 * <br> ----- | 1 | |
| | | | **TECHNICAL FIELDS SEARCHED (Int. Cl.5 )** <br><br> A01G |

The present search report has been drawn up for all claims

| Place of search | Date of completion of the search | Examiner |
|---|---|---|
| THE HAGUE | 06 FEBRUARY 1992 | PERNEY Y. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)